# EUROPÄISCHE PATENTSCHRIFT

(11) **EP 1 978 813 B1**
(45) Veröffentlichungstag und Bekanntmachung des Hinweises auf die Patenterteilung: **17.11.2010**
(21) Anmeldenummer: 06819897.7
(22) Anmeldetag: 04.12.2006
(51) Int. Cl.: A23F 3/40, A23L 1/22

(54) **TEE-AROMATISIERUNG**
TEA AROMATIZATION
THE AROMATISE

(30) Priorität: 23.01.2006 DE 102006003335
(43) Veröffentlichungstag der Anmeldung: 15.10.2008
(73) Patentinhaber: Symrise GmbH & Co. KG, 37603 Holzminden (DE)
(72) Erfinder: BARNEKOW, Rainer, 37696 Marienmünster (DE); BATALIA, Martina, 37691 Boffzen (DE)
(74) Vertreter: Eisenführ, Speiser & Partner
(86) Internationale Anmeldenummer: PCT/EP2006/069269
(87) Internationale Veröffentlichungsnummer: WO 2007/082599

(56) Entgegenhaltungen:
- EP-A- 0 499 858
- WO-A1-00/16643
- DE-A1- 2 647 211
- DE-A1- 3 211 696
- US-A- 3 914 439

## Beschreibung

Die vorliegende Erfindung betrifft mit Aromapartikeln aromatisierten Tee, dessen Herstellung und Verwendung.

Tee im Sinne dieser Erfindung ist sowohl der aus Blättern, Blattknospen und/oder zarten Stielen des Teestrauches Camellia sinensis (Teestrauch) nach üblichen Verfahren hergestellte Tee (Tee im engeren Sinne), als auch Pflanzenteile, die nicht vom Teestrauch stammen und die dazu zubereitet und bestimmt sind, in der Art wie Tee im engeren Sinne verwendet zu werden (Tee im weiteren Sinne), sowie Mischungen aus Tee im weiteren und im engeren Sinne. Im folgenden wird unter dem Begriff Teepartikel sowohl die Partikel des Tees im engeren Sinne als auch die Pflanzenteile des Tees im weiteren Sinne verstanden, insbesondere gegebenenfalls fermentierte Teeblätter und deren Bruchstücke.

Insbesondere wird im Sinne der vorliegenden Erfindung unter Tee oder Teeblättern ein Blatt-Tee mit dem Blattgrad "Broken", "Fanning" oder "Dust" verstanden. Fannings sind kleine Aussiebungen, die fast ausschließlich für Aufgussbeutel verwendet werden. Fannings weisen üblicherweise eine Teeblatt- bzw. Partikelgröße im Bereich 0,5 bis 2 mm auf, häufig beträgt die Partikelgröße 0,7 bis 1,5 mm. Tees entsprechend dem Blattgrad "Broken" umfassen üblicherweise Bestandteile mit einer Teeblatt- bzw. Partikelgröße bis 1,5 cm.

Tee im engeren Sinne ist insbesondere schwarzer Tee, Oolong-Tee, grüner Tee einschließlich Pu-Errh-Tee sowie gelber Tee. Tee im weiteren Sinne ist insbesondere Früchte- und/oder Kräutertee basierend beispielsweise auf Rotbusch, Hagebutte, Hibiscus, Äpfel, Orange, Pfefferminze oder Melisse.

Das Aromatisieren von Tee im engeren und weiteren Sinne ist seit langem bekannt. Dabei werden üblicherweise entweder flüssige Aromen (z.B. DE 30 06 092, DE 39 31 094), feste Aromen (z.B. DE 37 01 230, dort mit einer Korngröße von 0,2 - 2 mm), d.h. auf feste Träger aufgebrachte oder in feste Träger eingeschlossene Aromen, oder auch getrocknete Pflanzenstückchen verwendet.

Bei den flüssigen Aromen ist das Aroma nicht vor Verdampfung oder Oxidation geschützt, ferner kann das Aromatisieren mit flüssigen Aromen zur unerwünschten Agglomeration des Tees führen. Bei der Aromatisierung von Tee mittels fester Aromen werden Granulate oder agglomerierte Pulver eingesetzt, da diese größeren Partikel weniger zur Entmischung neigen. Übliche Partikelgrößen von Aromagranulaten betragen 500 µm bis 2 mm.

EP 0 499 858 beschreibt die Aromatisierung von Tee, wobei mikroverkapseltes Aroma mit einem Öl oder Fett und/oder Emulgator so lange vermischt werden, bis aggregierte größere Partikel erhalten werden, welche zumindest eine mittlere Partikelgröße von 150 Mikrometern aufweisen müssen. Diese aggregierten größeren Partikeln werden anschließend mit dem zu aromatisierenden Tee vermischt. Gemäß EP 0 499 858 werden Öl oder Fett und/oder Emulgator zur Bildung von aggregierten größeren Partikeln eingesetzt, nicht zur Verbesserung der Kohäsion und/oder Adhäsion von Aromapartikeln und Teepartikeln.

GB 2 074 838 werden aromahaltige Cyclodextrin-Komplexe mit Glycerin und Wasser sowie mit einem festen Bindemittel wie Dextran, löslicher Stärke, Gummi arabicum oder bestimmten Cellulosederivaten und gegebenenfalls Teestaub zu einer Paste geknetet, welche anschließend granuliert und getrocknet wird. Das erhaltene Granulat wird dort auf eine Partikelgröße im Bereich von 0,5 - 1 mm durchsiebt. Derartige Granulatfraktionen werden zuletzt mit Teeblättern zur Befüllung von Teebeuteln gemischt. Die dabei resultierende Mischung soll entmischungsstabil sein. Es handelt sich gemäß GB 2 074 838 um eine Trockenmischung, welche frei von Neutralöl im Sinne der vorliegenden Erfindung ist.

US 4,880,649 schlägt vor, zur Aromatisierung den Tee mit einer flüssigen Emulsion enthaltend emulgiertes flüssiges Aroma und einen Trägerstoff, beispielsweise (modifizierte oder abgebaute) Stärken wie Maltodextrine, zu besprühen.

Die noch unveröffentlichte DE 10 2004 036 187 betrifft mit einem sprühgetrockneten Aroma aromatisierten Tee unter Einsatz von Neutralöl, wobei das sprühgetrocknete Aroma vorzugsweise eine mittlere Partikelgröße (Medianwert) von 10 bis 100 Mikrometern aufweist.

Es wurde nun eine alternative bzw. einfachere Methode zur Aromatisierung von Tee mittels eines festen Aromas gesucht, die nicht zu einer Entmischung von Tee und festem Aroma führt.

Gegenstand der vorliegenden Erfindung ist daher ein Verfahren zum Aromatisieren von Tee, mit folgendem Schritt:
- Vermischen von
   (i) zu aromatisierenden Teepartikeln,
   (ii) Aromapartikeln mit einer mittleren Partikelgröße im Bereich von 200 - 600 Mikrometern mit
   (iii) einem Neutralöl.

Durch die Benetzung der Teepartikel, insbesondere von Teeblättern, mit Neutralöl und der anschließenden Zugabe der Aromapartikel unterbleibt die Entmischung von Teepartikeln und Aromapartikeln weitgehend. Durch die (vom Neutralöl bewirkte) Kohäsion und Adhäsion von Aromapartikeln und Teeblättern kann eine Entmischung weitgehend vermieden werden.

Die erfindungsgemäß eingesetzten Aromapartikel weisen eine mittlere Partikelgröße (Medianwert) von 200 bis 600 Mikrometern auf, vorzugsweise einen Medianwert von größer oder gleich 200 und kleiner als 500 Mikrometern, besonders bevorzugt einen Medianwert von größer oder gleich 250 und kleiner oder gleich 450 Mikrometern. In dem letztgenannten Bereich wird die Entmischung von Teepartikeln (insbesondere Teeblättern) und Aromapartikeln am stärksten vermieden.

Das weitestgehende bis vollständige Fehlen einer Entmischung ist besonders auffällig bei aromatisiertem Tee im engeren Sinne und insbesondere bei Broken-und Fanning-Tees, am meisten bei Tees des Blattgrades "Fanning" (mit einer Partikelgröße im Bereich 0,5 bis 2 mm). Überraschenderweise wurde festgestellt, dass Aromapartikel mit einer mittleren Partikelgröße im oben genannten Bereich, insbesondere mit einer mittleren Partikelgröße im Bereich von 250 bis 450 µm, sich besonders entmischungsstabil verhalten mit Neutralöl benetzten Tee-Bestandteilen. Die durch die erfindungsgemäße Zugabe des Neutralöls bewirkte Adhäsion und/oder Kohäsion weist der erfindungsgemäße Tee ein verbessertes und sehr günstiges Fließverhalten (Rheologie) auf, wodurch dieser eine nur sehr geringe Neigung zum Entmischen aufweist.

Die vorteilhafte Menge an Aromapartikeln liegt bei 0,1 bis 8 Gew.-%, bevorzugt von 0,5 bis 5 Gew.-%, besonders bevorzugt von 0,8 bis 4 Gew.-%, bezogen auf die Einwaage der Teepartikel oder Teeblätter.

Unter "Neutralöl" wird im weiteren Sinne der vorliegenden Erfindung ein im Wesentlichen geschmacksneutrales Triglycerid (Triester des Glycerins) verstanden, wie beispielsweise ein Pflanzenöl oder Triacetin (Glycerintriacetat). Triglycerid-Neutralöle weisen ein hervorragendes Spreitverhalten auf und sind nicht hygroskopisch, wodurch die unerwünschte Agglomeration von Teepartikeln und Teeblättern bzw. auch von Aromapartikeln (weitestgehend) vermieden wird.

Unter "Neutralöl" wird im engeren Sinne der vorliegenden Erfindung ein im Wesentlichen geschmacksneutrales Triglycerid mit gleichen oder verschiedenen C₂ bis C₁₈ - Fettsäureresten verstanden. Besonders geeignet sind die geschmacksneutralen Trigylceride mit gleichen oder verschiedenen C₆ bis C₁₂ - Fettsäureresten (MCT, medium-chain trigylceride), die hervorragende spreitende und benetzende Eigenschaften im Hinblick auf die zu aromatisierenden Teepartikel aufweisen.

Die bevorzugte Menge an Neutralöl beträgt 0,1 bis 5 Gew.-%, besonders bevorzugt 0,5 bis 2 Gew.-%, bezogen auf die Einwaage der Teepartikel, insbesondere der Teeblätter. Dabei werden die Teepartikel genügend benetzt, ohne dass es zu einer unerwünschten Verölung des Tees insbesondere beim Aufbrühen kommt.

Zusätzlich kann dem Neutralöl ein Duft- oder Aromastoff zugesetzt werden, um den Tee zu aromatisieren oder zu odorieren. Dieser Duft- oder Aromastoff kann fest oder flüssig sein.

Das erfindungsgemäße Verfahren kann durchgeführt werden, indem gleichzeitig Tee- und Aromapartikel in einem Mischer, vorzugsweise einem fluidisierenden Mischer, vorgelegt und unter Mischen mit Neutralöl versetzt werden.

Allgemein gesprochen werden allerdings die besten Ergebnisse mit einem erfindungsgemäßen Verfahren erzielt, bei dem die zu aromatisierenden Teepartikel in einem, vorzugsweise fluidisierenden, Mischer vorgelegt werden. Typische Mischer sind z.B. Pflugscharmischer (insbesondere solche des Herstellers Lödige) bzw. Mehrstromfluidmischer (insbesondere solche des Herstellers Gericke). Nach dem Fluidisieren der zu aromatisierenden Teepartikel durch den Mischer wird mittels einer Düse das Neutralöl auf die Teepartikel aufgesprüht. Hiernach werden die Aromapartikel zu dem fluidisierten Tee gegeben. Hierdurch kommt es zur Verteilung und zur Kohäsion und/oder Adhäsion von Aromapartikeln und Teepartikein.

Die Mischung wird meist entsprechend nachgemischt, bis eine hinreichende Verteilung von Aromapartikeln und Teepartikeln erreicht ist.

Die vorliegende Erfindung betrifft daher insbesondere ein Verfahren zum Aromatisieren von Tee, umfassend die Schritte:
a) Vorlegen von zu aromatisierenden Teeblättern und/oder Teepartikeln,
b) Versehen der vorgelegten Teeblätter bzw. -partiket mit einem Neutralöl zum Benetzen der Oberfläche der Teepartikel, und
c) Untermischen von Aromapartikeln mit einer mittleren Partikelgröße im Bereich von 200 - 600 Mikrometern unter die mit dem Neutralöl benetzten Teepartikel.

Die auf diese einfache und preiswerte Weise aromatisierten Teepartikel und/oder Teeblätter weisen ein geschütztes Aroma und darüber hinaus einen sehr geringen Staubanteil auf.

Der erfindungsgemäßen aromatisierten Teepartikel und/oder Teeblätter eignen sich auf Grund der genannten Eigenschaften besonders zur Abfüllung und Verwendung in Teebeuteln.

Die Erfindung betrifft daher weiterhin Teebeutel enthaltend erfindungsgemäß(e) aromatisierten Tee, insbesondere erfindungsgemäß aromatisierten Tee des Blattgrades "Fanning" und/oder "Broken".

Besonders bevorzugt wird das Verfahren durchgeführt, indem
a) Teepartikel, insbesondere des Blattgrades "Fanning" und/oder "Broken", vorzugsweise in einem fluidisierenden Mischer, vorgelegt werden,
b) ein Neutralöl, welches ein Triglycerid' mit gleichen oder verschiedenen C₂ bis C₁₈ - F ettsäureresten ist, auf die, bevorzugt fluidisierten, Teepartikel aufgebracht wird,
c) Aromapartikel mit einer mittleren Partikelgröße im Bereich von 200 - 600 Mikrometern, bevorzugt im Bereich von größer oder gleich 250 und kleiner oder gleich 450 Mikrometern, auf die mit Neutralöl behafteten Teepartikel gegeben werden,
   und
d) die resultierende Mischung gegebenenfalls weiter gemischt wird.

Das weitere Mischen kann insbesondere dazu dienen, weitere Bestandteile dem Tee einzumischen. Besonders vorteilhaft ist das nachträgliche Einmischen weiterer Bestandteile in einen erfindungsgemäß aromatisierten Tee, wenn diese Bestandteile keinen lang andauernde Mischungsbelastung aushalten, beispielsweise Blüten und andere leicht zerbrechliche Bestandteile.

Bei Aromen zum erfindungsgemäßen Aromatisieren von Tee handelt es sich meist um komplex zusammengesetzte flüssige Mischungen in der Regel flüchtiger Komponenten. Aromahaltige Granulate oder Partikel werden für verschiedene Zwecke benötigt und stellen eine gängige Darreichungsform in der Aromenindustrie dar.

Branchenüblich ist die Aromeneinkapselung mittels Sprühtrocknung, wie beispielsweise in US 3,159,585, US 3,971,852, US 4,532,145 oder US 5,124,162 beschrieben. Aromapartikel sind in vielen verschiedenen Geschmacksrichtungen und Partikelgrößen kommerziell erhältlich.

Kleinere Partikel, wie beispielsweise sprühgetrocknete Aromen, können im Bedarfsfalle mittels Agglomeration, sei es Trockenagglomeration oder Nassagglomeration, zu größeren Aromapartikeln geformt werden.

Unter dem Verfahren der Pressagglomeration wird eine Trockenagglomeration (dry agglomeration) verstanden, bei der im Regelfall einer trockenen Schüttung kleinere Partikel durch Presswerkzeuge zu größeren Partikeln, dem Pressagglomerat, zusammengepresst werden: Hierbei werden, im Gegensatz zur Nassagglomeration (wet agglomeration), keine Materialbrücken ausgebildet und ohne Zusatz von Bindemitteln gearbeitet.

Zur Durchführung der Pressagglomeration können Wälzdruckmaschinen oder Pressen eingesetzt werden, üblich ist beispielsweise die Walzenpressung mit einem Walzenkompaktor mit Glattwalzen oder Formwalzen. Die Pressagglomeration kann durch Kompression oder durch Extrusion erfolgen.

Branchenüblich sind auch mittels Extrusion hergestellte glasartige Aromapartikel, wie beispielsweise in WO 2003/092412, EP 1 123 660 oder EP 1 034 705 beschrieben.

Ebenfalls branchenüblich ist die Aromeneinkapselung mittels Wirbelschichtverfahren, wie beispielsweise in WO 2000/36931 oder WO 97/16078 beschrieben. Mittels Wirbelschichtverfahren hergestellte Aromapartikel sind in vielen verschiedenen Geschmacksrichtungen und Partikelgrößen kommerziell erhältlich.

Die im Rahmen der vorliegenden Erfindung bevorzugten Partikel weisen eine hohe Sphärizität auf.

Die Sphärizität entspricht nach H. Wadell ("Volume, Shape and Roundness of Rock Particles"; Journal of Geology 40 (1932) 443 - 451) dem Verhältnis von der Oberfläche einer volumengleichen Kugel zur tatsächlichen Oberfläche. Definitionsgemäß kann die Sphärizität Zahlenwerte im Bereich von > 0 bis 1 annehmen. Erfindungsgemäß bevorzugte Aromapartikel weisen eine Sphärizität von größer oder gleich 0,75, besonders bevorzugt von größer oder gleich 0,90, auf.

Aromapartikel mit hoher Sphärizität werden im Rahmen dieser Erfindung vorzugsweise in einem Wirbelschichtverfahren hergestellt, vorzugsweise mittels Wirbelschichtsprühgranulation. Besonders bevorzugt im Rahmen dieser Erfindung ist die Wirbelschichtsprühgranulation mit interner Keimbildung, wie beispielweise in WO 00/36931 oder US 4,946,654 beschrieben.

Ein besonders geeignetes Verfahren zur Wirbelschichtsprühgranulation und eine Vorrichtung für dieses Verfahren sind z.B. aus der US 4,946,654 bekannt. Eine solche Vorrichtung besteht im wesentlichen aus einem Wirbelschichtgranulator
- der Einrichtungen zur Verdüsung des in einer sprühfähigen Form zugeführten Produktes enthält,
- der ferner ein zur Rückführung von den aus dem Wirbelbett entweichenden Feingutanteilen geeignetes System enthält und
- an dessen Anströmboden unmittelbar ein oder mehrere Gegenstrom-Schwerkraft-Sichter angebracht sind.

Granulate mit enger Korngrößenverteilung lassen sich dabei wiederum bevorzugt dadurch herstellen, dass man
a) das zu granulierende Produkt in flüssiger Form in ein Wirbelbett einsprüht,
b) die mit dem Abgas aus dem Wirbelbett entweichenden Feingutanteile abscheidet und als Keime für die Granulatbildung in das Wirbelbett zurückführt,
c) allein durch Einstellung des Sichtgasstromes den Granulationsprozeß im Wirbelbett so beeinflußt, daß Granulate in der durch den Sichtgasstrom vorgegebenen Größe entstehen, und
d) das fertige Granulat allein über einen oder mehrere in den Anströmboden der Wirbelbettapparatur eingesetzte(n) Gegenstrom-Schwerkraft-Sichter entnimmt und
e) gegebenenfalls die so erhaltenen Granulate einer thermischen Nachbehandlung unterwirft.

Vorteilhafterweise kann man das Verfahren zur Herstellung der Aromapartikel so durchführen, dass sich der Granulatbildungsprozess im Wechselspiel zwischen Granulatwachstum und Keimbildung selbsttätig auf die durch die Sichtgaszufuhr vorgegebene Größe der ausgetragenen Granulate einstellt. Hierbei kann über den sichtenden Austrag die Größe der Granulate eingestellt werden. Diese Ausführungsformen des Verfahrens sind beispielsweise in den EP 0 332 031 und EP 0 332 929 beschrieben. Grundsätzlich lässt sich das Verfahren auch mittels Standardgranulatoren kontinuierlich oder batchweise durchführen. Die Sichtung kann ebenfalls separat und nachgeschaltet mit Sieben oder anderen Klassierern erfolgen. Keimmaterial kann beispielsweise durch Mahlung hergestellt werden.

Übliche Aromapartikel umfassen mindestens einen Trägerstoff, ein Aroma oder einen einzelnen Aromastoff sowie weitere Substanzen, wie beispielsweise einen Emulgator.

Die Aromabeladung im erfindungsgemäß einzusetzenden Aromapartikel kann, je nach Anforderung und gewünschtem sensorischen Profil, in weiten Bereichen variiert werden. Üblicherweise liegt die Aromabeladung im Bereich von 1 bis 50 Gew.-%, meist im Bereich 5 bis 30 Gew.-% bezogen auf das Gesamtgewicht des Aromapartikels.

Als Trägerstoffe für die Aromen in den erfindungsgemäß einzusetzenden Aromapartikel können Einzelsubstanzen bzw. Substanzgemische eingesetzt werden.

Vorteilhafte Aromapartikel umfassen als Trägerstoffe Kohlenhydrate und/oder Kohlenhydratpolymere (Polysaccharide). Als bevorzugte Trägerstoffe in den erfindungsgemäß einzusetzenden Aromapartikeln sind beispielsweise Hydrokolloide wie Stärken, abgebaute Stärken, chemisch oder physikalisch modifizierte Stärken, modifizierte Cellulosen, Gummi Arabicum, Ghatti-Gummi, Traganth, Karaya, Carrageenan, Guarkernmehl, Johannisbrotkernmehl, Alginate, Pektin, Inulin oder Xanthan Gum, Dextrine und Maltodextrine zu nennen.

Vorzugsweise enthalten die erfindungsgemäß zu verwendenden Aromapartikel - ebenso wie der erfindungsgemäße Tee keine Cyclodextrine.

Der Zersetzungsgrad der Stärke wird mit der Kennzahl "Dextrose-Equivalent" (DE) gemessen, welche die Grenzwerte 0 für das langkettige Glucosepolymer Stärke und 100 für die reine Glucose annehmen kann.

Besonders bevorzugte Trägerstoffe in den erfindungsgemäß einzusetzenden Aromapartikeln sind Maltodextrine, wobei Maltodextrine mit DE-Werten im Bereich 10 bis 30 hier wiederum vorteilhaft sind.

Die bevorzugte Wirbelschichtsprühgranulation wird im allgemeinen wie folgt ausgeführt: zunächst wird das Trägermaterial, bevorzugt Dextrin oder ein Maltodextrin, in Wasser gelöst. In die wässrige Lösung werden Emulgator und das Aroma gegeben, wobei sich die Homogenisierung der Mischung durch intensive mechanische Vermischung bewährt hat. Die Emulsion wird (unter ständigem Rühren) anschließend in der Wirbelschicht sprühgranuliert.

Als Aromen kommen beispielsweise etherische Öle, Fraktionen daraus, oder einzelne Aromastoffe in Frage.

Beispielsweise seien genannt: Extrakte aus natürlichen Rohstoffen wie etherische Öle, Concretes, Absolues, Resine, Resinoide, Balsame, Tinkturen wie Anisöl; Bergamotteöl; Citronenöl; Eucalyptusöl; Grapefruitöl; Kamillenöl; Limetteöl; Nelkenblütenöl, Orangenöl; Pfefferminzöl; Rosmarinöl; Salbeiöl; Sternanisöl; Thymianöl; Vanilleextrakt; Wacholderbeeröl; Wintergrünöl; Zimtblätteröl; Zimtrindenöl; sowie Fraktionen davon, bzw. daraus isolierte Inhaltsstoffe.

Einzelne Aromastoffe, die Bestandteil des Aromas sein können, sind beispielsweise aus folgenden Stoffklassen: Aliphatische Ester (gesättigt und ungesättigt) z.B. Ethylbutyrat, Allylcapronat; aromatische Ester z.B. Benzylacetat, Methylsalicylat; organische aliphatische Säuren (gesättigt und ungesättigt) z.B. Essigsäure, Capronsäure; organische aromatische Säuren; aliphatische Alkohole (gesättigt und ungesättigt); cyclische Alkohole z.B. Menthol; aromatische Alkohole z.B. Benzylalkohol; aliphatische Aldehyde (gesättigt und ungesättigt) z.B. Acetaldehyd; aromatische Aldehyde z.B. Benzaldehyd; Vanillin; Ketone z.B. Menthon; cyclische Ether z.B. 4-Hydroxy-5-methylfuranon; aromatische Ether z.B. p-Methoxybenzaldehyd, Guajacol; Lactone z.B. gamma-Decalacton; Terpene z.B. Limonen, Linalool, Terpinen, Terpineol, Citral.

Als Aromen im Rahmen der vorliegenden Erfindung sind bevorzugt: Beerenfrüchte (z.B. Himbeeraromen, Erdbeeraromen), Citrusfrüchte, Kernobst, Vanille, Gewürze (z.B. Zimt, Nelken), Kräuter (z.B. Thymian, Rosmarin, Salbei, Kamille), Minze. Besonders bevorzugte Aromen sind Citronen-, Bergamotte- und Orangenaromen. Diese Aromen sind bei flüssiger Auftragung auf Tee sehr oxidationsanfällig und führen daher leicht zur unerwünschten sensorischen Fehlnoten (Off - Noten). Mit dem erfindungsgemäßen Verfahren können Tees, insbesondere Beuteltees hergestellt werden, bei denen die Neigung zur sensorischen Fehlnoten (Off - Noten) stark reduziert ist, ohne dass es zu einer Entmischung des Tees und des Aromas kommt.

Die Mischung zur Herstellung der erfindungsgemäß einzusetzenden Aromapartikel kann auch übliche Zusatzstoffe und Zutaten wie LebensmittelFarbstoffe, Süßstoffe, Antioxidantien, Genusssäuren wie Zitronensäure, geschmacksbeeinflussende Stoffe wie Natriumglutamat, Vitamine, Mineralstoffe, Saftkonzentrate etc. enthalten, so dass die erfindungsgemäß eingesetzten Aromapartikel auch solche Zusatzstoffe umfassen können.

Die Erfindung wird anhand der folgenden Beispiele weiter erläutert, ohne dass das Beispiel den Gegenstand der Erfindung oder den Schutzbereich beschränken soll. Sofern nicht anders angegeben, beziehen sich alle Angaben auf das Gewicht.

### Beispiel 1:

In einer Granulierapparatur des in EP 163 836 dargestellten Typs (mit den folgenden Merkmalen: Durchmesser Anströmboden: 225 mm, Sprühdüse: Zweistoffdüse; Sichtender Austrag: Zick-Zack-Sichter; Filter: internes Schlauchfilter) wird eine Lösung bestehend aus 44 Gew.-% Wasser, 11 Gew.-% Bergamotteöl-Aroma, 13 Gew.-% Gummi arabicum und 32 Gew.-% hydrolysierter Stärke (Maltodextrin DE 15-19) sowie etwas Farbstoff granuliert. Die Lösung wird bei einer Temperatur von 32°C in den Wirbelschichtgranulator gesprüht. Zur Fluidisierung des Bettinhaltes wird Stickstoff in einer Menge von 140 kg/h eingeblasen. Die Eintrittstemperatur des Fluidisiergases beträgt 140°C. Die Temperatur des Abgases beträgt 76°C. Als Sichtgas wird ebenfalls Stickstoff in einer Menge von 15 kg/h mit einer Temperatur von 50°C zugeführt. Der Inhalt des Wirbelbettes beträgt ca. 500 g. Die Granulierleistung beträgt ca. 2,5 kg pro Stunde. Man erhält ein frei fließendes Granulat mit einem mittleren Teilchendurchmesser von 420 Mikrometern. Die Granulate sind rund und weisen eine glatte Oberfläche auf. Aufgrund des konstanten Druckverlustes des Filters und des ebenfalls konstant bleibenden Bettinhalts ist von stationären Bedingungen hinsichtlich des Granulationsprozesses auszugehen.

850 g Schwarztee Fannings werden in einen 5 Liter Lödige Pflugscharmischer vorgelegt. Die Teeblätter werden 10 Sekunden vorgemischt und fluidisiert.

Ohne Unterbrechung des Mischprozesses wird mittels einer Ein- oder Zweistoffdüse 6 g eines feinen Neutralöl-Nebels (MCT-Ölaerosol) auf die fluidisierten Teeblätter gesprüht. Dies dauert etwa 60 Sekunden.

Ohne Unterbrechung des Mischprozesses wird anschließend 40 g der oben genannten orange eingefärbten Aromapartikel mit Bergamotteöl-Aroma zu der Mischung gegeben und die gesamte Mischung weitere 60 Sekunden gemischt.

### Beispiel 2:

In der in Beispiel 1 beschriebenen Apparatur wird eine Granulierung einer Lösung bestehend aus 50 Gew.-% Wasser, 11 Gew.-% Gummi arabicum, 22,5 Gew.-% hydrolysierter Stärke (Maltodextrin DE 15-19) und 16,5 Gew.-% Vanillearoma sowie einer geringen Menge Farbstoff durchgeführt. Die Lösung wird bei einer Temperatur von 32°C in den Wirbelschichtgranulator gesprüht. Zur Fluidisieung des Bettinhaltes wird Stickstoff in einer Menge von 110 kg/h eingeblasen. Die Eintrittstemperatur des Fluidisiergases beträgt 130°C. Die Temperatur des Abgases beträgt 84°C. Als Sichtgas wird ebenfalls Stickstoff in einer Menge von 9 kg/h mit einer Temperatur von 81°C zugeführt. Der Inhalt des Wirbelbettes beträgt ca. 500 g. Die Granulierleistung beträgt ca. 1,5 kg pro Stunde. Man erhält ein frei fließendes Granulat mit einem mittleren Teilchendurchmesser von 350 Mikrometern. Die Granulate sind rund und weisen eine mäßig glatte Oberfläche (teilweise mit Sekundäragglomeraten) auf.

800 g Rotbusch-Tee (Rooibos-Tee) werden in einen 5 Liter Lödige Pflugscharmischer vorgelegt. Die Teeblätter werden 10 Sekunden lang vorgemischt und fluidisiert.

Ohne Unterbrechung des Mischprozesses werden mittels einer Ein- oder Zweistoffdüse 5 g eines feinen Neutralöl-Nebels (MCT-Ölaerosol) auf die fluidisierten Teeblätter gesprüht. Dies dauert etwa 60 Sekunden.

Ohne Unterbrechung des Mischprozesses werden anschließend 33 g des oben genannten Aromapartikel mit Vanillearoma zu der Mischung gegeben und die gesamte Mischung weitere 60 Sekunden lang gemischt.

### Beispiel 3: Bestimmen der Entmischung (Segregation)

Unter der Entmischung (Segregation) einer Feststoffmischung versteht man das unerwünschte Separieren einer oder mehrerer Komponenten der Mischung.

Die Entmischung tritt meist infolge Vibration, Umfüllen, Transport oder sonstiges Bewegen der Mischung auf.

Die Entmischungsneigung der Mischung wurde wie folgt beurteilt:
a) Visuell: durch visuelles Vergleichen mehrerer Stichproben bzgl. der Aromenverteilung im Tee.
b) sensorische Verkostung: unterschiedliche Stichproben der Mischung wurden in einem Dreieckstest in einem Panel getestet und die sensorische Abweichung bzgl. der Aromenintensität beurteilt.

Die beiden erfindungsgemäßen Tees der Beispiele 1 und 2 zeigten sich in diesen Tests entmischungsstabil.

## Patentansprüche

1. Verfahren zum Aromatisieren von Tee, umfassend das Vermischen von
- zu aromatisierenden Teepartikeln und
- Aromapartikeln mit einer mittleren Partikelgröße von 200 bis 600 µm mit einem Neutralöl.

2. Verfahren nach Anspruch 1, wobei zunächst die zu aromatisierenden Teepartikel und optional die Aromapartikel vorgelegt werden, und anschließend mit dem Neutralöl vermischt werden.

3. Verfahren nach Anspruch 1 oder 2, **dadurch gekennzeichnet, dass** die zu aromatisierenden Teepartikel eine Partikelgröße bis 1,5 cm besitzen und vorzugsweise eine Partikelgröße von 0,5 mm bis 1,5 cm besitzen.

4. Verfahren nach einem der vorherigen Ansprüche, **dadurch gekennzeichnet, dass** die Teepartikel zum Versehen mit dem Neutralöl fluidisiert werden.

5. Verfahren nach einem der vorherigen Ansprüche, **dadurch gekennzeichnet, dass** das Neutralöl ein Triglycerid ist, vorzugsweise ein Triglycerid mit C₂-C₁₈-Fettsäureresten.

6. Verfahren nach einem der vorherigen Ansprüche, **dadurch gekennzeichnet, dass** die Aromapartikel eine Sphärizität von größer oder gleich 0,75 aufweisen.

7. Verfahren nach einem der vorherigen Ansprüche, **dadurch gekennzeichnet, dass** die Aromapartikel mittels Wirbelschichtsprühgranulation hergestellt werden.

8. Verfahren nach einem der vorherigen Ansprüche, **dadurch gekennzeichnet, dass** die Aromapartikel als Trägerstoffe Kohlenhydrate und/oder Kohlenhydratpolymere, vorzugsweise Maltodextrine, umfassen.

9. Verwendung von Aromapartikeln mit einer mittleren Partikelgröße (Medianwert) von 200 bis 600 µm zum Aromatisieren von mit Neutralöl versehenen Teepartikeln.

10. Aromatisierter Tee, hergestellt oder herstellbar nach einem der vorherigen Ansprüche.

11. Teebeutel, enthaltend einen aromatisierten Tee nach Anspruch 10.

## Claims

1. Method for aromatising tea, comprising mixing
- tea particles to be aromatised and
- aroma particles having an average particle size of 200 to 600 µm with a neutral oil.

2. Method according to Claim 1, wherein initially the tea particles to be aromatised and optionally the aroma particles are introduced, and are subsequently mixed with the neutral oil.

3. Method according to Claim 1 or 2, **characterised in that** the tea particles to be aromatised have a particle size of up to 1.5 cm and preferably have a particle size of 0.5 mm to 1.5 cm.

4. Method according to any one of the preceding claims, **characterised in that** the tea particles are fluidised in order to be provided with the neutral oil.

5. Method according to any one of the preceding claims, **characterised in that** the neutral oil is a triglyceride, preferably a triglyceride with C₂-C₁₈ fatty acid residues.

6. Method according to any one of the preceding claims, **characterised in that** the aroma particles have a sphericity of greater than or equal to 0.75.

7. Method according to any one of the preceding claims, **characterised in that** the aroma particles are produced by means of fluidised bed spray granulation.

8. Method according to any one of the preceding claims, **characterised in that** the aroma particles comprise carbohydrates and/or carbohydrate polymers, preferably maltodextrins, as carriers.

9. Use of aroma particles having an average particle size (median value) of 200 to 600 µm for aromatising tea particles provided with neutral oil.

10. Aromatised tea which is produced or can be produced according to any one of the preceding claims.

11. Tea bag containing an aromatised tea according to Claim 10.

## Revendications

1. Procédé d'aromatisation du thé, comprenant le mélange
- de particules de thé à aromatiser et
- de particules d'arôme d'une granulométrie moyenne comprise entre 200 µm et 600 µm
avec une huile neutre.

2. Procédé selon la revendication 1, les particules de thé à aromatiser et, facultativement, les particules d'arôme étant présentées d'abord et mélangées ensuite avec l'huile neutre.

3. Procédé selon la revendication 1 ou 2, **caractérisé par le fait que** les particules de thé à aromatiser ont une granulométrie allant jusqu'à 1,5 cm et ont, de préférence, une granulométrie comprise entre 0,5 mm et 1,5 cm.

4. Procédé selon l'une des revendications précédentes, **caractérisé par le fait que** les particules de thé sont fluidisées en vue de leur mise en présence avec l'huile neutre.

5. Procédé selon l'une des revendications précédentes, **caractérisé par le fait que** l'huile neutre est un triglycéride, de préférence un triglycéride contenant des résidus d'acide gras C₂-C₁₈.

6. Procédé selon l'une des revendications précédentes, **caractérisé par le fait que** les particules d'arôme ont une sphéricité supérieure ou égale à 0,75.

7. Procédé selon l'une des revendications précédentes, **caractérisé par le fait que** les particules d'arôme sont fabriquées par granulation en lit fluidisé.

8. Procédé selon l'une des revendications précédentes, **caractérisé par le fait que** les particules d'arôme comprennent, en tant qu'excipients, des hydrates de carbone et/ou des polymères d'hydrates de carbone, de préférence de la maltodextrine.

9. Utilisation de particules d'arôme d'une granulométrie moyenne (valeur médiane) comprise entre 200 µm et 600 µm pour l'aromatisation de particules de thé mises en présence d'une huile neutre.

10. Thé aromatisé, fabriqué ou pouvant être fabriqué selon l'une des revendications précédentes.

11. Sachets de thé contenant un thé aromatisé selon la revendication 10.
